(19) Europäisches Patentamt
European Patent Office
Office européen des brevets

(11) EP 2 845 748 B1

(12) **EUROPEAN PATENT SPECIFICATION**

(45) Date of publication and mention
of the grant of the patent:
**22.03.2017 Bulletin 2017/12**

(21) Application number: **13784279.5**

(22) Date of filing: **05.04.2013**

(51) Int Cl.:
*B60C 7/10* (2006.01)     *B60C 11/00* (2006.01)
*B60C 11/02* (2006.01)     *B60C 7/14* (2006.01)

(86) International application number:
**PCT/ES2013/070223**

(87) International publication number:
**WO 2013/164505 (07.11.2013 Gazette 2013/45)**

(54) **WHEEL ARCH AND WHEEL**

RADLAUF UND RAD

ARC DE ROUE ET ROUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.04.2012 ES 201230648**

(43) Date of publication of application:
**11.03.2015 Bulletin 2015/11**

(73) Proprietor: **Resa Rodrigo, Benito**
**31513 Arguedas, Navarra (ES)**

(72) Inventor: **Resa Rodrigo, Benito**
**31513 Arguedas, Navarra (ES)**

(74) Representative: **Carvajal y Urquijo, Isabel et al**
**Clarke, Modet & Co.**
**Suero de Quiñones, 34-36**
**28002 Madrid (ES)**

(56) References cited:
**WO-A1-95/03183       BE-A- 393 621**
**DE-C- 361 567         GB-A- 123 284**
**GB-A- 123 284         GB-A- 278 482**
**GB-A- 190 912 977     US-A- 1 235 597**
**US-A- 1 235 597       US-A1- 2009 095 389**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

## Field of the invention

Wheel arch and wheel for the automotive sector and agricultural machinery such as tractors and harvesters, which may be used for the cultivation of rice, corn, and cereals in general.

## State of the art

Within the automotive sector, we have an area with particular characteristics: the agricultural sector.

One problem that has been the detected is the need to adapt the tread surface of agricultural and industrial vehicles to the characteristics of the soil, which vary between muddy and unstable surfaces in rice fields to the hard and rough surfaces of paved roads.

This need is justified by the high cost of repairing a full pneumatic in terms of cost and time, the high degradation thereof with the friction with the pavement or the damages caused to paved roads when the tread surface is made of iron.

Having detected this problem, the invention proposes a solution that, described very briefly, comprises the division of the rolling liner into easily exchangeable modules, the liner modules being designed for each type of surface as well. This solution improves the adherences, reliability, safety, and transformation of the wheel for the different types of soil. Another advantage is the fact that they are not pressurized pneumatics, with which the possibility of punctures is prevented and the use of rubber resources is increased.

Tractors and harvesters for the cultivation of rice and corn currently use caterpillars for harvesters, and only iron wheels for tractors, which have iron pegs and cannot be driven on roads or highways because they break the road and tar. In addition, the hammering produced in the tread causes breakdowns and disruptions of the tractors, and at the end of the day, it is easy for the back of the driver to be affected. Some tractors have twin wheels in the rear shaft, but they are welded or screwed, that is to say, they are fixed, and made of iron. Therefore, the tractor must be transported in cars and continue to experience the same inconveniences than in a conventional wheel (their thickness is fixed, the cars are not certified and are not covered by insurance in the case of an accident, etc.).

US2009/0095389 discloses a pneumatic system that includes a cylindrical metal edge with an external surface and a plurality of segments of solid pneumatics. Each one of the pneumatic segments has at least one track and is connected to an assembly plate. The assembly plates are circumferentially located on the external surface of the rim. The pneumatic system can be used in an off-earth moving machine, such as in a dragging and raking device or in another type of device.

CN201390090Y discloses a repairable and reusable modularized pneumatic with convenient installation, simple manufacture and low manufacturing cost. The pneumatic comprises a steel ring of the pneumatic and a rim of a wheel, and is characterized in that the flanges are symmetrically arranged in the circumferential part in two sides of the steel ring of the pneumatic. The pneumatic also comprises exchangeable rubber pneumatic plates with an identical shape that are assembled in equidistant intervals along the peripheral surface of the steel ring of the pneumatic. The shock-absorption, collision resistance, and puncture resistance features are superior than the features of solid pneumatics and air-filled pneumatics, and the pneumatic is appropriate for use in military motor vehicles and vehicles transporting heavy cargo in areas with irregular terrain.

US1235597A shows a wheel arch according to the preamble of claim 1 and particularly discloses a wheel with separable elastic blocks. The wheel comprises an annular rim plate on which is seated a supplemental rim plate configured to hold the tire blocks, wherein the tire blocks may be taken off and replaced by fastening means.

## Description of the invention

The invention is defined by a wheel arch according to claim 1. Preferred embodiments are set forth in the dependent claims.

The invention relates to wheels for vehicles such as automobiles, tractors, harvesters or other types of agricultural machinery intended for the cultivation of rice, corn or cereals. The wheels are covered with rubber modules. This way, sufficient shock-absorption is obtained to move from one plot of land to another without the need to put the tractor in cars to be moved, while also preventing back discomfort for the driver.

Some of the advantages of the wheels of the invention are the following:

- The tractors do not need to be put in cars to be moved;
- Adaptability to different terrains: dry, muddy, etc.;
- Shock-absorption, thereby preventing breakdowns and back discomfort for the driver;
- Lower costs with respect to liners, because only the damaged piece is removed without the need for a jack. In fact, the vehicle can keep working with the broken piece until the end of the day;
- Flexibility for the placement of modules with different drawings and liner pegs: for rice, shovel-type pegs; for road works, smooth modules; for places covered in ice and snow, pegs with nails or spikes;
- The greasing means can be used to clean the wheel arch or the entirety of the wheel without the need to disassemble the arch or the wheel: by increasing the pressure in the greasing means, the greasing element pushes the elements that could be introduced into the cavities of the arch or wheel or cause an abnormal wear and tear in the arch or wheel, outwards.

## Brief description of the drawings

Next, a series of drawings will be described in brief, which help to understand the invention better and are expressly related to an embodiment of said invention presented as a non-limitative example thereof.

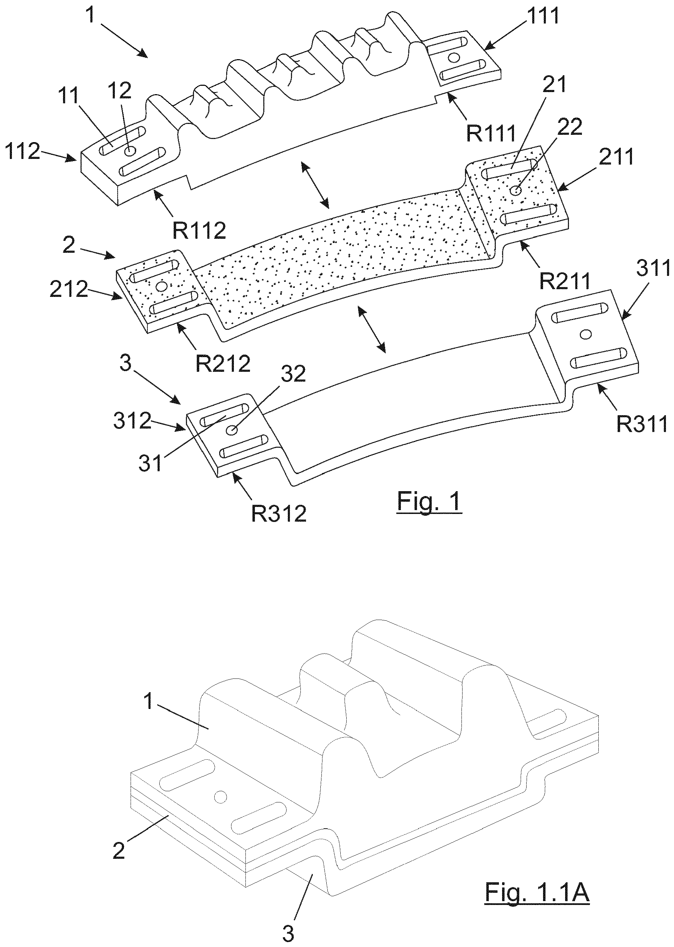

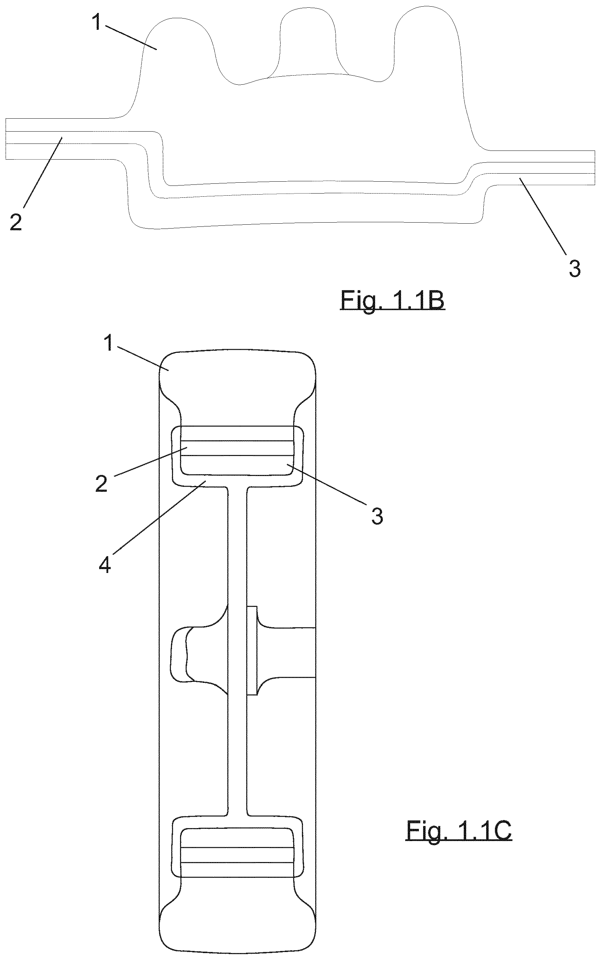

Figure 1 shows an exploded view of the wheel arch of a tractor wheel for the cultivation of rice and the elements making up the arch.

Figure 1.1A shows a perspective of the wheel arch of Fig. 1.

Figure 1.1B shows a lateral view of the wheel arch of Fig 1.

Figure 1.1C shows a diameter cut of a wheel comprising the wheel arch of Fig. 1 on the rim.

Figure 2 shows a perspective of the frame.

Figure 3 shows a wheel arch having a liner to roll on a rolling surface.

Figure 4 shows a detail of a wheel arch for the sowing and trade of rice.

Figure 5 shows an embodiment of the invention where two wheel arches are fixed to the rim by means of screws.

Figure 6 shows additional elements of the grip system of the wheel arches to the rim.

Figure 7 shows joined wheel arches and a grease circuit indicated with arrows, as well as several components of the invention.

Figure 8 shows an embodiment of the invention where the liners of the wheel arches and the liner supplement show a shape to be applied to private cars.

Figure 9 shows an exploded view where the components of an embodiment of the invention can be observed.

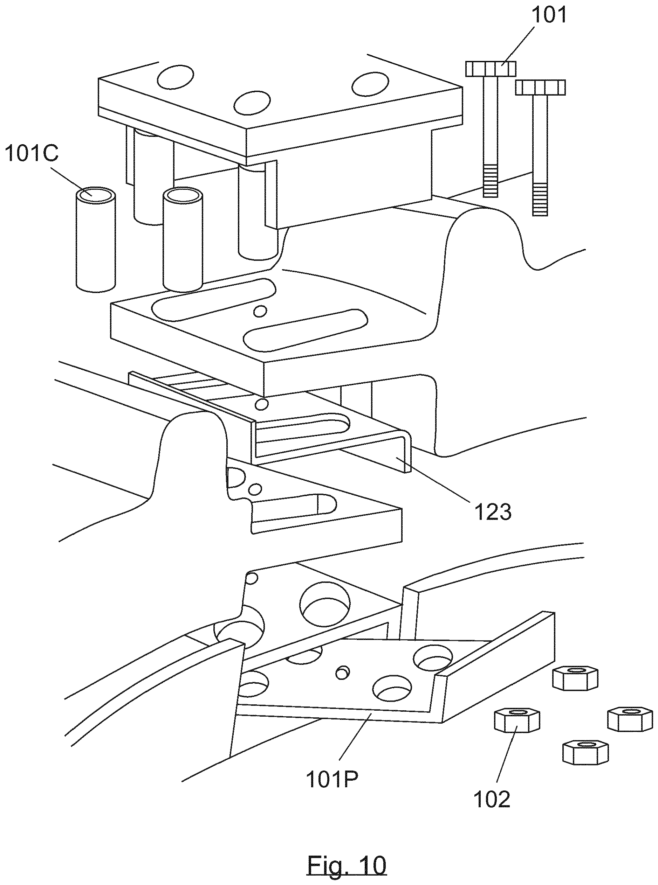

Figure 10 is a detailed view of figure 9.

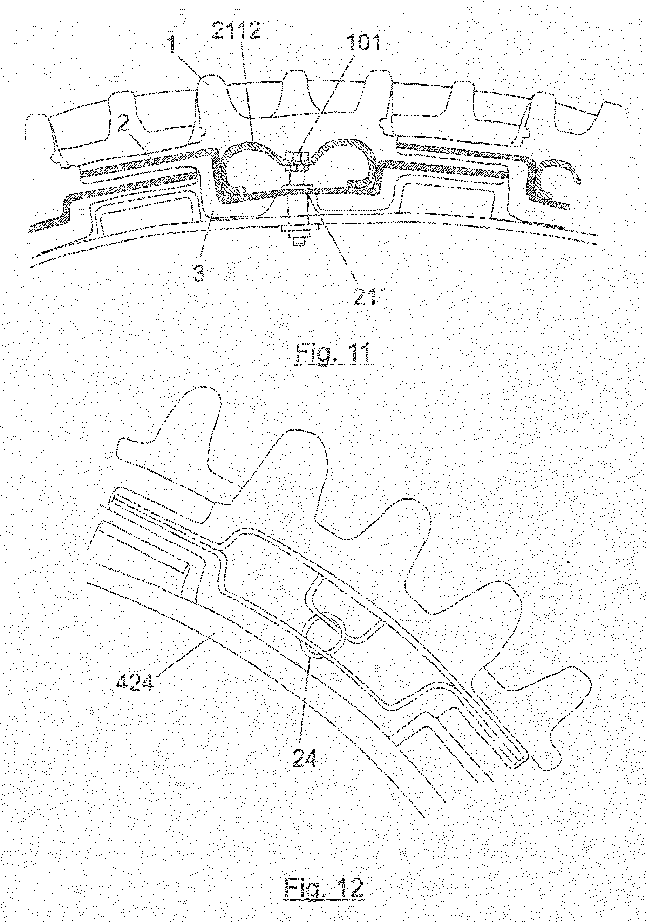

Figure 11 shows a second embodiment of the invention, where the fixing means of the wheel arch comprise a central screw and a spring-shaped plate.

Figure 12 shows a third embodiment of the invention, where the fixing means of the wheel arch comprise a connecting ring and retaining means.

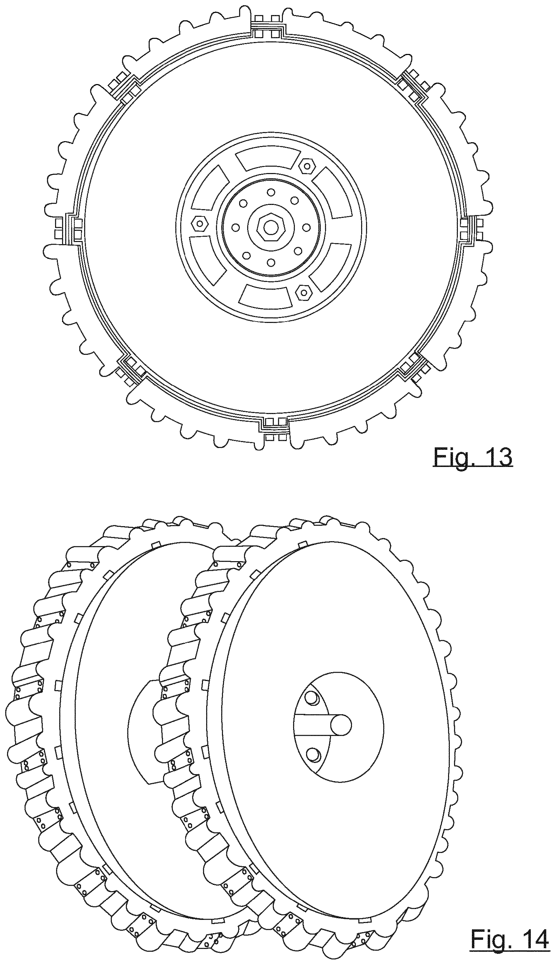

Figure 13 shows a front tractor wheel with eight five-peg pieces.

Figure 14 shoes a twin tractor or harvester wheel for the cultivation and harvesting of rice. In this case it comprises 20 pieces.

## Detailed description of an embodiment

Each arch in its entirety may be considered as an anti-vibration silentblock, configured to be linked to an adjacent piece. In an embodiment of the invention, the arches measure Pi 100 mm and are configured to be fastened to the rim (4) with four screws on each side, which pass through elongated holes of the components of the arch. These elongated holes allow for some flexibility of the components of the arch; the arch can be deformed by stretching when the wheel rests on the terrain through the arch. In order to reduce the number of screws necessary to fix all the arches, the size of the arches can be doubled to 2 Pi 100 mm. If the diameter of the wheel so requires it, arches with different sizes can be used.

Given that the arch of a circumference corresponding to an angle is related by means of the following expression:

$$s = \theta \cdot r$$

where:

s = arch length
θ = angle in rad (radians)
r = circumference radius

Some examples of the invention are included, where the angle for the entire wheel is 2 Pi radians:

• 2,000 mm-diameter wheel (1,000 mm radius):

s = 2 Pi · 1,000 mm = 6,283.2 mm

Selecting the number of pieces to make up the entire arch of the wheel:

20 314.16 mm-pieces
10 628.32 mm-pieces

• 1,900 mm-diameter wheel (950 mm radius):

s = 2 Pi · 950 mm = 5,969.04 mm

Selecting the number of pieces to make up the entire arch of the wheel:

19 314.16 mm-pieces, or
9 628.32 mm-pieces and 1 314.16 mm-piece

• 1,800 mm-diameter wheel (900 mm radius):

s = 2 Pi · 900 mm = 5,654.88 mm

Selecting the number of pieces to make up the entire arch of the wheel:

18 314.16 mm-pieces, or
9 628.32 mm-pieces.

With reference to the figures, Figure 1 shows an exploded view of the wheel arch of a tractor wheel and the elements making up the arch:

- Peg-shaped rubber liner (1) to roll on a rolling surface;
- Frame (2) in the form of a metal leaf spring; iron-steel;
- Rubber seat (3) configured to settle in the rim (4) of the wheel.

Figure 1.1A shows a perspective of the wheel arch of Fig. 1.

Figure 1.1B shows a lateral view of the wheel arch of Fig 1.

Figure 1.1C shows a diameter cut of a wheel comprising the wheel arch of Fig. 1 on the rim (4).

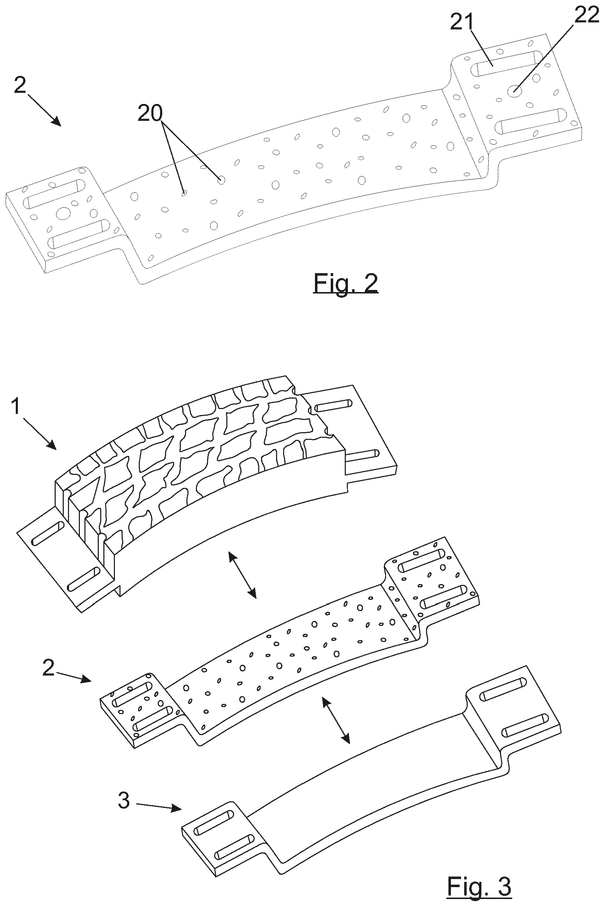

Figure 2 shows a perspective of the frame (2). The frame (2) or metal leaf spring can be thicker or thinner according to the weight of the vehicle. The frame (2) comprises:

- A plurality of perforations (20) configured for the liner (1) and the seat (3) to be joined when vulcanized due to the leakage of the vulcanization;
- A plurality of fixing slots (21) configured to allow a passage of grip screws;
- A greasing hole (22) configured to allow a passage of grease and prevent the wear and tear of the rubber with its movement.

Figure 3 shows a wheel arch having a liner (1) configured to circulate on roads.
In an embodiment of the invention, this type of liner (1) is valid to be used in cars or trucks. The liner (1) illustrated in Figure 3 corresponds to a private car.

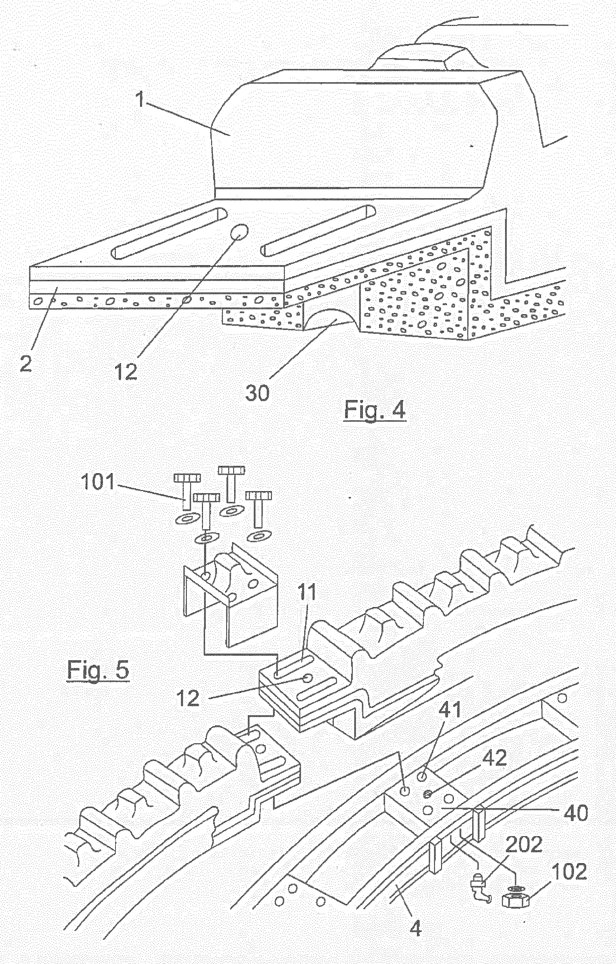

Figure 4 shows a detail of a wheel arch for the cultivation and trade of rice.

- Rubber peg of the liner (1);
- Configured channel (30) of the seat (3) to allow a passage of grease;
- Frame (2);
- Greasing hole (12).

Figure 5 shows an embodiment of the invention where two wheel arches are fixed to the rim (4) by means of screws (101), which fix both arches to an inverted U rim supplement (40) with fourth fixing holes (41), which may be welded to the rim (4). A grease nipple (202) and the nuts (102) are also shown in Figure 5.

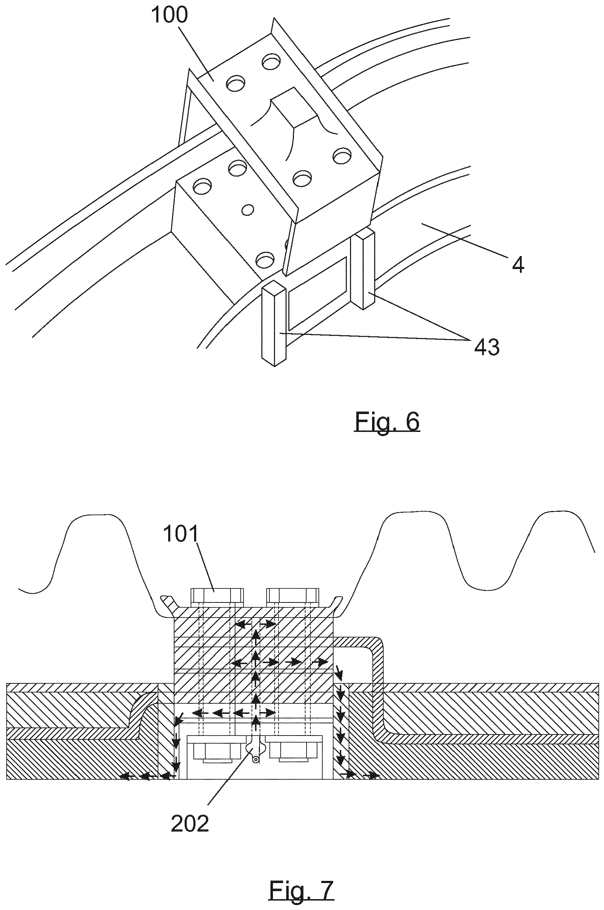

Figure 6 shows additional elements of a grip system of the wheel arches to the rim (4);

- a liner supplement (110) having an anti-vibrations peg vulcanized to the closing element (100);
- positioning means (43), which are fastening pillars in an embodiment of the invention to avoid the angular mobility of the closing element (100) with respect to the rim (4).

Figure 7 shows joined wheel arches and a grease circuit indicated with arrows, as well as several components of the invention:

- grease nipple (202);
- screws (101);
- closing element (100);
- positioning means (43) to avoid angular mobility.

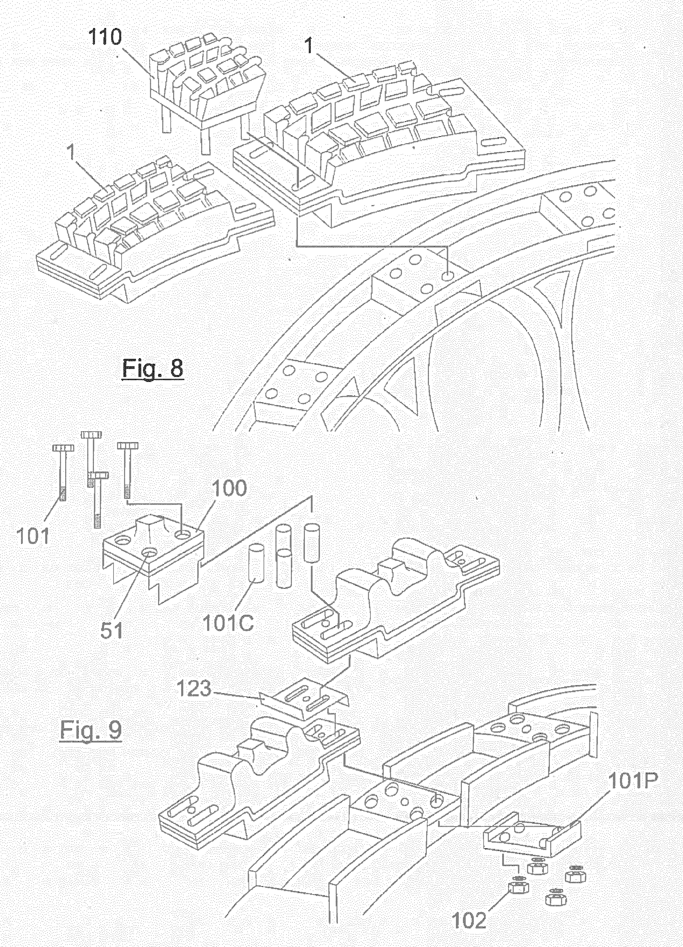

Figure 8 shows an embodiment of the invention where the liners (1) of the wheel arches and the liner supplement (110) show a shape to be applied to private cars.

**Claims**

1.  Wheel arch configured to be coupled to a rim (4) of a wheel, comprising:

    1a) a liner (1) configured to roll on a rolling surface;
    1b) a frame (2) configured to support the liner (1) and providing rigidity to the wheel arch; and
    1c) fixing means for fixing the frame (2) to a rim (4);

    the wheel arch comprises:

    3a) a seat (3) configured to settle in a rim (4) and provide shock-absorption between the frame (2) and a rim (4); and
    3b) fastening means of the seat (3) between the frame (2) and a rim (4);

    **characterized in that:**

    16a) the frame (2) is configured in the form of a leaf spring to provide shock-absorption by means of a controlled bending deformation of the frame (2).

2.  Wheel arch according to claim 1, **characterized in that:**

    2a) the frame (2) is covered by the liner (1) without an air chamber between the frame (2) and the liner (1).

3.  Wheel arch according to any one of the claims 1-2, **characterized in that** the fixing means comprise:

    4a) an initial section (111, 211, 311) in a first extremity of the arch;
    4b) a final section (112, 212, 312) in a second extremity of the arch opposite the first extremity;

    where:

4c) the initial section (111, 211, 311) has an initial radius (R111, R211, R311);

4d) the final section (112, 212, 312) has a final radius (R112, R212, R312);

4e) the final radius (R112, R212, R312) is greater than the initial radius (R111, R211, R311) and the initial radius (R111, R211, R311) and the final radius (R112, R212, R312) are configured such that the initial section (111, 211, 311) and the final section (112, 212, 312) overlap each other when two arches are placed in a consecutive manner.

**4.** Wheel arch according to claim 3, **characterized in that** it comprises an intermediate sheet (123) in a location selected between the initial section (111, 211, 311) and the final section (112, 212, 312).

**5.** Wheel arch according to any one of the claims 1-4, **characterized in that**:

6a) the fixing means comprise, in the liner (1), a first fixing hole (11) configured to allow a passage of a grip screw (101);

**and in that:**

7a) the fixing means comprise, in the frame (2), a second fixing hole (21) configured to allow a passage of a grip screw (101);

**and in that:**

8a) the fastening means comprise, in the seat (3), a third fixing hole (31) configured to allow a passage of a grip screw (101).

**6.** Wheel arch according to claim 5, **characterized in that**: the fixing holes (11, 21, 31) comprise slotted openings in the initial section (111, 211, 311) and in the final section (112, 212, 312) configured to facilitate the assembly/disassembly of the arch and an operation in the form of leaf spring during the use of the arch.

**7.** Wheel arch according to any one of the claims 5-6, **characterized in that** the fixing means comprise:

10a) in the frame (2), a central fixing hole (21') configured to allow a passage of a grip screw (101);
10b) a curved plate in the form of a spring or clip (2112), configured to press the frame (2) against a rim (4) by means of a grip screw (101).

**8.** Wheel arch according to any one of the claims 1-7, **characterized in that** the fixing means comprise, in the frame (2), a connecting ring (24) configured to be connected to retaining means (424).

**9.** Wheel arch according to any one of the claims 1-8, **characterized in that** it comprises:

12a) greasing means configured to grease a layer selected from the liner (1), the frame (2), the seat (3) and combinations thereof;

**and in that:**

13a) the greasing means comprise, in the liner (1), a first greasing hole (12) configured to allow a passage of grease;

**and in that:**

14a) the greasing means comprise, in the frame (2), a second greasing hole (22) configured to allow a passage of grease;

**and in that:**

15a) the greasing means comprise, in the seat (3), a third greasing hole (32) configured to allow a passage of grease.

**10.** Wheel comprising a plurality of wheel arches according to any one of the claims 1-9, **characterized in that** the arches are configured to make up a tread of the wheel.

**11.** Wheel according to claim 10 when depending on claim 9, **characterized in that** it comprises:

18a) a rim (4) with a rim supplement (40) configured to define a location of a wheel arch on the rim (4);

**and in that:**

19a) the fixing means comprise, in a location selected between the rim (4) and the rim supplement (40), a fourth fixing hole (41), configured to allow a passage of a grip screw (101);

**and in that:**

20a) the greasing means comprise, in a location selected between the rim (4) and the rim supplement (40), a fourth greasing hole (42), configured to allow a passage of grease.

**12.** Wheel according to any one of the claims 10-11, **characterized in that** it comprises:

21a) a closing element (100) configured to be coupled on two consecutive arches to collaborate with the fixing of the two arches on the rim (4); and

22a) positioning means (43) configured to constrain a relative movement between the closing element (100) and the rim (4);

wherein:

23a) the closing element (100) comprises a liner supplement (110) configured to provide continuity to the tread between the liners (1) of two consecutive arches.

13. Wheel according to claim 12, **characterized in that:**

24a) the fixing means comprise, in the closing element (100), a plurality of fifth fixing holes configured to allow a passage of grip screws (101);

**and in that:**

25a) the fixing means comprise a plurality of nuts (102) configured to thread with the grip screws (101) and fix components of the wheel to the rim (4).

14. Wheel according to any one of the claims 11-13, **characterized in that** it comprises:

a plurality of caps (101C) configured to prevent the contact of the grip screws (101) and the fixing holes (11, 21, 31, 41); and
27a) a stopper sheet (101P) configured to delimit a radial penetration of the caps (101C) into the wheel;

**and in that:**

27b) the fixing means comprise, in the stopper sheet, a fifth fixing hole (51) configured to allow a passage of a grip screw (101).

**Patentansprüche**

1. Radlauf, konfiguriert, um an einer Felge (4) eines Rads befestigt zu sein, umfassend:

1a) eine Ummantelung (1), konfiguriert, um auf einer rollenden Oberfläche zu rollen;
1b) einen Rahmen (2), konfiguriert, um die Ummantelung (1) zu tragen und dem Radlauf Steifigkeit zu verleihen; und
1c) Befestigungselemente, um den Rahmen (2) an einer Felge (4) zu befestigen;

der Radlauf umfasst:

3a) einen Sitz (3), konfiguriert, um sich in eine Felge (4) zu setzen und Stoßdämpfung zwischen dem Rahmen (2) und einer Felge (4) bereitzustellen; und
3b) Befestigungselemente des Sitzes (3) zwischen dem Rahmen (2) und einer Felge (4);

**dadurch gekennzeichnet, dass:**

16a) der Rahmen (2) in der Form einer Blattfeder konfiguriert ist, um Stoßdämpfung durch eine kontrollierte Biegeverformung des Rahmens (2) bereitzustellen.

2. Radlauf nach Anspruch 1, **dadurch gekennzeichnet, dass:**

2a) der Rahmen (2) mit der Ummantelung (1) ohne eine Luftkammer zwischen dem Rahmen (2) und der Ummantelung (1) bedeckt ist.

3. Radlauf nach einem der Ansprüche 1 bis 2, **dadurch gekennzeichnet, dass** die Befestigungselemente Folgendes umfassen:

4a) einen Anfangsabschnitt (111, 211, 311) an einem ersten Endpunkt des Laufes;
4b) einen Endabschnitt (112, 212, 312) an einem zweiten Endpunkt des Laufes gegenüber dem ersten Endpunkt;

wobei:

4c) der Anfangsabschnitt (111, 211, 311) einen Anfangsradius (R111, R211, R311) aufweist;
4d) der Endabschnitt (112, 212, 312) einen Endradius (R112, R212, R312) aufweist;
4e) der Endradius (R112, R212, R312) größer als der Anfangsradius (R111, R211, R311) ist und der Anfangsradius (R111, R211, R311) und der Endradius (R112, R212, R312) so konfiguriert sind, dass der Anfangsabschnitt (111, 211, 311) und der Endabschnitt (112, 212, 312) sich gegenseitig überlappen, wenn zwei Läufe aufeinanderfolgend angebracht sind.

4. Radlauf nach Anspruch 3, **dadurch gekennzeichnet, dass** er ein Zwischenblech (123) in einer Position zwischen dem Anfangsabschnitt (111, 211, 311) und dem Endabschnitt (112, 212, 312) umfasst.

5. Radlauf nach einem der Ansprüche 1 bis 4, **dadurch gekennzeichnet, dass:**

6a) die Befestigungselemente in der Ummantelung (1) eine erste Befestigungsbohrung (11) umfassen, konfiguriert, um einen Durchgang einer Klemmschraube (101) zu ermöglichen;

**und dadurch, dass:**

7a) die Befestigungselemente in dem Rahmen (2) eine zweite Befestigungsbohrung (21) umfassen, konfiguriert, um einen Durchgang einer Klemmschraube (101) zu ermöglichen;

**und dadurch, dass:**

8a) die Befestigungselemente, in dem Sitz (3), eine dritte Befestigungsbohrung (31) umfassen, konfiguriert, um einen Durchgang einer Klemmschraube (101) zu ermöglichen.

6. Radlauf nach Anspruch 5, **dadurch gekennzeichnet, dass:** die Befestigungsbohrungen (11, 21, 31) geschlitzte Öffnungen im Anfangsabschnitt (111, 211, 311) und im Endabschnitt (112, 212, 312) umfassen, konfiguriert, um die Montage/Demontage des Laufes und einen Vorgang in Form einer Blattfeder bei der Verwendung des Laufes zu ermöglichen.

7. Radlauf nach einem der Ansprüche 5 bis 6, **dadurch gekennzeichnet, dass** die Befestigungselemente Folgendes umfassen:

10a) in dem Rahmen (2) eine zentrale Befestigungsbohrung (21'), konfiguriert, um einen Durchgang einer Klemmschraube (101) zu ermöglichen;
10b) eine gebogene Platte in Form einer Feder oder einer Klemme (2112), konfiguriert, um den Rahmen (2) mit Hilfe einer Klemmschraube (101) gegen eine Felge (4) zu drücken.

8. Radlauf nach einem der Ansprüche 1 bis 7, **dadurch gekennzeichnet, dass** die Befestigungselemente in dem Rahmen (2) einen Verbindungsring (24) umfassen, konfiguriert, um verbunden zu werden, um die Mittel (424) festzuhalten.

9. Radlauf nach einem der Ansprüche 1 bis 8, **dadurch gekennzeichnet, dass** er Folgendes umfasst:

12a) Schmiermittel, konfiguriert, um eine ausgewählte Schicht aus der Ummantelung (1), des Rahmens (2), des Sitzes (3) und Kombinationen davon zu schmieren;

**und dadurch dass:**

13a) die Schmiermittel in der Ummantelung (1) eine erste Schmierungsbohrung (12) umfassen, konfiguriert, um einen Durchfluss von Schmierfett zu ermöglichen;

**und dadurch, dass:**

14a) die Schmiermittel in dem Rahmen (2) eine zweite Schmierungsbohrung (22) umfassen, konfiguriert, um einen Durchfluss von Schmierfett zu ermöglichen;

**und dadurch, dass:**

15a) die Schmiermittel in dem Sitz (3) eine dritte Schmierungsbohrung (32) umfassen, konfiguriert, um einen Durchfluss von Schmierfett zu ermöglichen.

10. Rad, welches mehrere Radläufe nach einem der Ansprüche 1 bis 9 umfasst, **dadurch gekennzeichnet, dass** die Läufe so konfiguriert sind, dass sie eine Lauffläche des Rades bilden.

11. Rad nach Anspruch 10, wenn abhängig von Anspruch 9, **dadurch gekennzeichnet, dass** es Folgendes umfasst:

18a) eine Felge (4) mit einer Felgenergänzung (40), konfiguriert, um eine Position eines Radlaufes auf der Felge (4) zu definieren;

**und dadurch, dass:**

19a) die Befestigungselemente an einer ausgewählten Position zwischen der Felge (4) und der Felgenergänzung (40) eine vierte Befestigungsbohrung (41) umfassen, konfiguriert, um einen Durchgang einer Klemmschraube (101) zu ermöglichen;

**und dadurch, dass:**

20a) die Schmiermittel an einer ausgewählten Position zwischen der Felge (4) und der Felgenergänzung (40) eine vierte Schmierungsbohrung (42) umfassen, konfiguriert, um einen Durchfluss von Schmierfett zu ermöglichen.

12. Rad nach einem der Ansprüche 10 bis 11, **dadurch gekennzeichnet, dass** es Folgendes umfasst:

21a) ein Verschlussteil (100), konfiguriert, um an zwei aufeinander folgende Läufe gekoppelt zu sein, um an der Befestigung der beiden Läufe auf der Felge (4) mitzuwirken; und
22a) Positionierungsmittel (43), konfiguriert, um eine relative Bewegung zwischen dem Verschlussteil (100) und der Felge (4) zu unterbinden;

wobei:

23a) das Verschlussteil (100) eine Ummantelungsergänzung (110) umfasst, konfiguriert, um der Lauffläche zwischen den Ummantelungen (1) zweier aufeinander folgender Läufe Kontinuität zu verleihen.

13. Rad nach Anspruch 12, **dadurch gekennzeichnet, dass:**

24a) die Befestigungselemente in dem Verschlussteil (100) mehrere fünfte Befestigungsbohrungen umfassen, konfiguriert, um einen Durchgang einer Klemmschraube (101) zu ermöglichen;

**und dadurch, dass:**

25a) die Befestigungselemente mehrere Muttern (102) umfassen, konfiguriert, um mit den Klemmschrauben (101) verschraubt zu werden und Komponenten des Rades auf der Felge (4) zu befestigen.

14. Rad nach einem der Ansprüche 11 bis 13, **dadurch gekennzeichnet, dass** es Folgendes umfasst:

mehrere Kappen (101 C), konfiguriert, um den Kontakt der Klemmschrauben (101) mit den Befestigungsbohrungen (11, 21, 31, 41) zu verhindern; und
27a) ein Abschlussblech (101 P), konfiguriert, um ein radiales Eindringen der Kappen (101 C) in das Rad zu begrenzen;

**und dadurch, dass:**

27b) die Befestigungselemente in dem Abschlussblech eine fünfte Befestigungsbohrung (51) umfassen, konfiguriert, um einen Durchgang einer Klemmschraube (101) zu ermöglichen.

**Revendications**

1. Arc de roue configuré pour être couplé à une jante (4) d'une roue, comprenant :

1a) une enveloppe (1) configurée pour rouler sur une surface de roulage ;
1b) un châssis (2) configuré pour supporter l'enveloppe (1) et pour apporter

une rigidité à l'arc de roue ; et

1 c) des moyens de fixation pour fixer le châssis (2) à une jante (4) ;

l'arc de roue comprend :

3a) un siège (3) configuré pour être logé dans une jante (4) et pour apporter un amortissement des chocs entre le châssis (2) et une jante (4) ; et
3b) des moyens de serrage du siège (3) entre le châssis (2) et une jante (4) ;

**caractérisé en ce que :**

16a) le châssis (2) est configuré sous la forme d'un ressort à lame pour apporter un amortissement des chocs au moyen d'une déformation en flexion contrôlée du châssis (2).

2. Arc de roue selon la revendication 1, **caractérisé en ce que :**

2a) le châssis (2) est recouvert par l'enveloppe (1) sans une chambre à air entre le châssis (2) et l'enveloppe (1).

3. Arc de roue selon l'une quelconque des revendications 1-2, **caractérisé en ce que** les moyens de fixation comprennent :

4a) un segment initial (111, 211, 311) à une première extrémité de l'arc ;
4b) un segment final (112, 212, 312) à une deuxième extrémité de l'arc opposée à la première extrémité ;

où :

4c) le segment initial (111, 211, 311) a un rayon initial (R111, R211, R311) ;
4d) le segment final (112, 212, 312) a un rayon final (R112, R212, R312) ;
4e) le rayon final (R112, R212, R312) est plus grand que le rayon initial (R111, R211, R311) et le rayon initial (R111, R211, R311) et le rayon final (R112, R212, R312) sont configurés de telle sorte que le segment initial (111, 211, 311) et le segment final (112, 212, 312) se superposent l'un à l'autre lorsque deux arcs sont placés de façon consécutive.

4. Arc de roue selon la revendication 3, **caractérisé en ce qu'**il comprend une tôle intermédiaire (123) dans un emplacement choisi entre le segment initial (111, 211, 311) et le segment final (112, 212, 312).

5. Arc de roue selon l'une quelconque des revendications 1-4, **caractérisé en ce que :**

6a) les moyens de fixation comprennent, dans l'enveloppe (1), un premier orifice de fixation (11) configuré pour permettre un passage d'une vis d'accrochage (101) ;

**et en ce que** :

7a) les moyens de fixation comprennent, dans le châssis (2), un deuxième orifice de fixation (21) configuré pour permettre un passage d'une vis de maintien (101) ;

**et en ce que** :

8a) les moyens de serrage comprennent, dans le siège (3), un troisième orifice de fixation (31) configuré pour permettre un passage d'une vis de maintien (101).

6. Arc de roue selon la revendication 5, **caractérisé en ce que** : les orifices de fixation (11, 21, 31) comprennent des ouvertures rainurées dans le segment initial (111, 211, 311) et dans le segment final (112, 212, 312) configurées pour faciliter l'assemblage/désassemblage de l'arc et une opération sous la forme de ressort à lame pendant l'utilisation de l'arc.

7. Arc de roue selon l'une quelconque des revendications 5-6, **caractérisé en ce que** les moyens de fixation comprennent :

10a) dans le châssis (2), un orifice de fixation central (21') configuré pour permettre un passage d'une vis de maintien (101);
10b) une platine incurvée sous la forme d'un ressort ou pince (2112), configurée pour appuyer le châssis (2) contre une jante (4) au moyen d'une vis de maintien (101).

8. Arc de roue selon l'une quelconque des revendications 1-7, **caractérisé en ce que** les moyens de fixation comprennent, dans le châssis (2), un anneau de connexion (24) configuré pour être connecté à des moyens de retenue (424).

9. Arc de roue selon l'une quelconque des revendications 1-8, **caractérisé en ce qu'il comprend** :

12a) des moyens de graissage configurés pour graisser une couche choisie parmi l'enveloppe (1), le châssis (2), le siège (3) et des combinaisons de ces derniers ;

**et en ce que:**

13a) les moyens de graissage comprennent, dans l'enveloppe (1), un premier orifice de graissage (12) configuré pour permettre un passage de graisse ;

**et en ce que** :

14a) les moyens de graissage comprennent, dans le châssis (2), un deuxième orifice de graissage (22) configuré pour permettre un passage de graisse ;

**et en ce que** :

15a) les moyens de graissage comprennent, dans le siège (3), un troisième orifice de graissage (32) configuré pour permettre un passage de graisse.

10. Roue comprenant une pluralité d'arcs de roue selon l'une quelconque des revendications 1-9, **caractérisée en ce que** les arcs sont configurés pour former une bande de roulement de la roue.

11. Roue selon la revendication 10 lorsqu'elle dépend de la revendication 9, **caractérisée en ce qu'**elle comprend :

18a) une jante (4) avec un supplément de jante (40) configurée pour définir un emplacement d'un arc de roue sur la jante (4) ;

**et en ce que :**

19a) les moyens de fixation comprennent, dans un emplacement choisi entre la jante (4) et le supplément de jante (40), un quatrième orifice de fixation (41), configuré pour permettre un passage d'une vis de maintien (101) ;

**et en ce que :**

20a) les moyens de graissage comprennent, dans un emplacement choisi entre la jante (4) et le supplément de jante (40), un quatrième orifice de graissage (42), configuré pour permettre un passage de graisse.

12. Roue selon l'une quelconque des revendications 10-11, **caractérisée en ce qu'**elle comprend :

21a) un élément de fermeture (100) configuré pour être couplé à deux arcs consécutifs pour collaborer avec la fixation des deux arcs sur la jante (4) ; et
22a) des moyens de positionnement (43) configurés pour forcer un mouvement relatif entre l'élément de fermeture (100) et la jante (4) ;

dans laquelle :

23a) l'élément de fermeture (100) comprend un supplément d'enveloppe (110) configuré pour apporter une continuité à la bande de roulement entre les enveloppes (1) de deux arcs consécutifs.

**13.** Roue selon la revendication 12, **caractérisée en ce que :**

24a) les moyens de fixation comprennent, dans l'élément de fermeture (100), une pluralité de cinquièmes orifices de fixation configurés pour permettre un passage de vis de maintien (101) ;

**et en ce que :**

25a) les moyens de fixation comprennent une pluralité d'écrous (102) configurés pour être vissés avec les vis de maintien (101) et pour fixer des composants de la roue à la jante (4).

**14.** Roue selon l'une quelconque des revendications 11-13, **caractérisée en ce qu'**elle comprend :

une pluralité de douilles (101C) configurées pour empécher le contact des vis de maintien (101) et des orifices de fixation (11, 21, 31, 41) ; et
27a) une tôle de butée (101P) configurée pour délimiter une pénétration radiale des douilles (101 C) dans la roue ;

**et en ce que :**

27b) les moyens de fixation comprennent, dans la tôle de butée, un cinquième orifice de fixation (51) configuré pour permettre un passage d'une vis de maintien (101).

1

111

11

12

112

R111

21

22

211

2

212

R112

R211

3

311

312

32

31

R212

R311

R312

Fig. 1

1

2

3

Fig. 1.1A

Fig. 1.1B

Fig. 1.1C

Fig. 2

Fig. 3

Fig. 4

Fig. 5

Fig. 6

Fig. 7

110

1

1

<u>Fig. 8</u>

101

100

51

101C

123

<u>Fig. 9</u>

101P

102

101

101C

123

101P

102

Fig. 10

Fig. 11

Fig. 12

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090095389 A
- CN 201390090 Y
- US 1235597 A